Europäisches Patentamt

European Patent Office

Office européen des brevets

(11) Publication number: **0 196 150**
**B1**

(12) **EUROPEAN PATENT SPECIFICATION**

(45) Date of publication of patent specification: **07.11.90**

(51) Int. Cl.⁵: **G 01 F 1/80**

(21) Application number: **86300491.7**

(22) Date of filing: **24.01.86**

(54) **Fluid flow measurement.**

(30) Priority: **25.03.85 US 715692**

(43) Date of publication of application:
**01.10.86 Bulletin 86/40**

(45) Publication of the grant of the patent:
**07.11.90 Bulletin 90/45**

(84) Designated Contracting States:
**DE FR GB IT**

(56) References cited:
**EP-A-0 109 218**
**EP-A-0 119 638**
**JP-A-57 137 818**

(73) Proprietor: **INTERNATIONAL CONTROL AUTOMATION FINANCE S.A.**
**16 Rue des Bains**
**Ville de Luxembourg (LU)**

(72) Inventor: **Mizerak, Dennis S.**
**4470 Locust Lane**
**Brunswick Ohio 44212 (US)**

(74) Representative: **Cotter, Ivan John et al**
**D. YOUNG & CO. 10 Staple Inn**
**London WC1V 7RD (GB)**

Courier Press, Leamington Spa, England.

# EP 0 196 150 B1

**Description**

This invention relates to apparatus for and methods of measuring the mass flow rate of fluid flow.

Devices are known which utilise the effect of angular motion on a moving fluid to measure mass flow directly. Examples of such devices are disclosed in US Patent No. US—A—2 865 201 (Roth) and US Patents No. US—A—3 355 944 and No. US—A—3 485 098 (Sipin).

US Patent No. US—A—4 109 524 (Smith) discloses an apparatus and method for measuring mass flow rate through a conduit by reciprocating a section of the conduit to produce longitudinal angular rotation of that section. Linkages are connected to the section both for reciprocating it and for measuring a force exerted on the section, which force is due to an apparent force produced by mass flow through the conduit section. A direct measurement can thus be taken of the mass flow rate in this manner.

European Patent Application Publication No. EP—A—0 119 638 discloses apparatus for measuring the mass flow rate of a fluid flow. The apparatus comprises a system of straight parallel tubes. The number of tubes is 3 to 24 (being 16 in the apparatus specifically disclosed), though there is a mention that the number should be at least two. The tubes extend between a pair of flanges which are connected to adaptors that cause a fluid flow whose mass rate is to be measured to be distributed between the tubes. An exciting means is provided for vibrating the tube system at 50% of the length of the tubes. Respective detectors (accelerometers) are provided at 25% and 75% of the tube lengths to detect distortion, and the phase difference between signals provided by the detectors (which is proportional to the mass flow rate) is measured. In the arrangement specifically disclosed the tubes are fixed together at the exciting point and detecting points and can be considered as one single tube. There is, however, a mention that such fixation is not necessary.

European Patent Application No. EP—A—0 109 218 also discloses apparatus for measuring the mass flow rate of a fluid flow. The apparatus comprises an inlet manifold, an outlet manifold and a pair of U-shaped tubes. The tubes are mounted parallel to one another and fixedly attached at their open ends to the inlet and outlet manifolds so as to extend from the manifolds in a cantilever fashion. The tubes each have a bending axis located near the fixedly attached ends and located in the same plane as and perpendicular to the side legs of the tube, and a torsion axis located in the same plane as the side legs of the tube, essentially parallel to and midway between the side legs, and perpendicular to the bending axis. Also, the tubes have equal moments of inertia and equal spring constants about the bending axes, and equal moments of inertia and equal spring constants about the torsion axes. Further, the tubes have a resonant frequency of oscillation about the torsion axes which is both different from the resonant frequency of oscillation about the bending axes and different from odd harmonic values of the resonant frequency of oscillation about the bending axes. In use, a fluid flow whose mass flow rate is to be measured is supplied to the tubes from an inlet plenum, formed in part by the inlet manifold, so that approximately half of the fluid flows through the tubes in an essentially parallel fashion, the flow being drained from the tubes through an exit plenum formed in part by the outlet manifold and recombined. Drive means is attached to the tubes at the bends to sinusoidally drive the tubes at the resonant frequency about the bending axes, and as the tines of a tuning fork. Means is provided to measure the time interval between the passage of first side legs of each of the tubes through the respective mid-planes of oscillation, and the passage of the second side legs, caused by Coriolis forced deflection about the torsion axes, through the respective mid-planes of oscillation at a later time. The fluid means flow rate passing through the tubes is determined from the magnitude of the measured time interval.

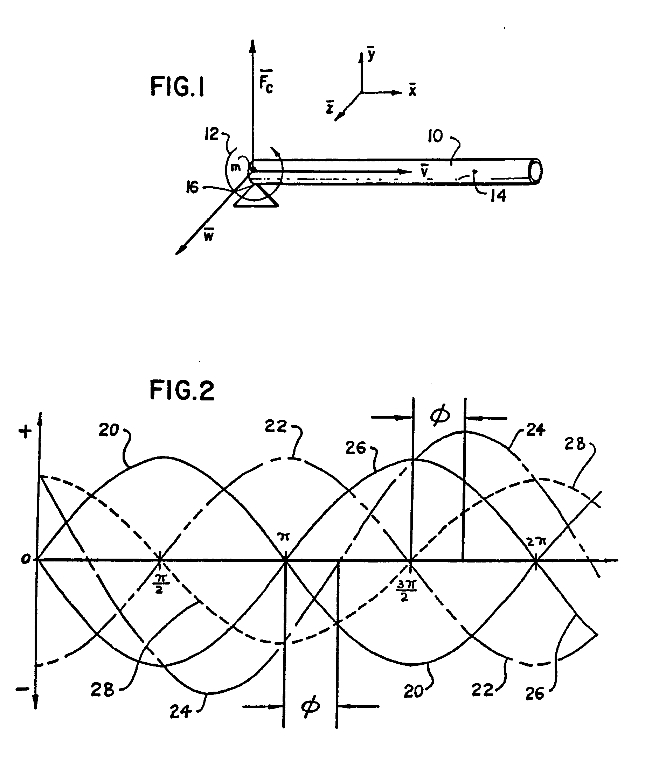

To understand how mass flow rate can be measured using the effects of this force, reference is now made to Figure 1 of the accompanying drawings which shows an arrangement of vectors on an X, Y, Z co-ordinate system.

When a moving mass m with a velocity vector $\overline{v}$ is acted upon by a force that causes angular velocity $\overline{w}$ about some axis, a force $\overline{F}_c$ is observed such that:

$$\overline{F}_c = 2m\overline{w} \times \overline{v}.$$

If a tube or conduit 10 for carrying a fluid is rotated about a pivot 16 in the XY plane, in the clockwise direction shown by an arrow 12, this causes an angular velocity $\overline{w}$ as shown in Figure 1. If however, rather than rotating the tube 10 as shown by the arrow 12, the tube is caused to oscillate back and forth about its pivot 16, the magnitude and polarity of the angular velocity will also oscillate and, therefore, the magnitude and polarity of the force $\overline{F}_c$ will oscillate proportionately.

For any pont along the tube, for example a point 14, a displacement vector can be represented for small amplitudes as lying along the $\overline{Y}$-axis only. As the flow tube 10 is forced to oscillate with very small amplitude by a sinusoidal driver about its pivot point 16, and with the point 14 far from the pivot point 16, then the magnitude of its displacement, velocity and acceleration vectors can be represented by a graph which is shown in Figure 2 of the accompanying drawings. The displacement of the point 14 along the $\overline{Y}$-axis is shown by a solid line 20. The velocity $\overline{v}$ of the point 14 represents dy/dt and is shown by a dash double dot line 22. Acceleration $\overline{A}$ represents the second derivative of displacement with respect to time $(d^2y/dt^2)$ and is shown by a solid line 26.

2

If there is a fluid flowing in the tube, a force $\overline{F}_c = 2m\overline{w} \times \overline{v}$ acting on the flowing mass m will also be developed. By Newton's Third Law, there will be developed an equal and opposite force acting on the tube itself and the force will be associated with an acceleration $\overline{A}'$, with $\overline{F}_c$ and $\overline{A}'$ acting along the $\overline{Y}$-axis. The magnitude of $\overline{A}'$ is shown by a dotted line 28 in Figure 2. From the definition of the force $\overline{F}_c$ set forth above, it can be seen that this force is proportional to the velocity of the point 14, which is 90° out of phase with the acceleration due to the driving force applied to the tube. The resultant force acting at the point 14 will be the sum of the driving force and the force $-\overline{F}_c$, with these two forces being 90° out of phase. A dot-dash curve 24 represents the sum of the accelerations $\overline{A}$ and $\overline{A}'$, which is proportional to the sum of the driving force and the force $-\overline{F}_c$. A phase difference of $\emptyset$ between the original driving acceleration and the resultant summed acceleration will, therefore, be a direct measurement of the force $-\overline{F}_c$ which is directly proportional to the mass flow rate.

If the driving force is sinusoidal, then its displacement, velocity and acceleration will likewise be sinusoidal and vary by 90° and 180° respectively. This allows the phase difference $\emptyset$ to be the same regardless of whether it is measured relative to the displacement, velocity or acceleration functions of the drive force versus resultant drive force plus the force $-\overline{F}_c$.

According to one aspect of the invention there is provided apparatus for measuring the mass flow rate of a fluid flow, the apparatus comprising:

a pair of straight parallel flexible conduits each having opposite ends, and axis and a mid-point between the opposite ends;

support means connected to the conduits for holding the opposite ends only of the conduits at substantially fixed positions;

connector means connected to the support means for supplying a fluid flow whose mass flow rate is to be measured to the pair of straight parallel conduits such that each conduit receives approximately one half of the fluid flow at one end of the conduits and the fluid flow is recombined at the other end of the conduits;

drive means associated with the pair of conduits for oscillating the pair of conduits towards and away from each other at a selected frequency in a direction transverse to their respective axes and substantially at the mid-points of the conduits;

at least one sensor for sensing motion of the conduits at a sensing point spaced from each mid-point and from the opposite ends to enable detection of a phase difference in the related frequency resulting from fluid flow; and

phase measuring means connected to the sensor and to the drive means for measuring the phase difference between motion at the mid-point and motion at the sensing point, the phase difference corresponding to a measurement of the mass flow rate of the fluid flow.

In a preferred embodiment of the invention described hereinbelow, the drive means are provided in the middle of the conduits and between them for applying lateral oscillations to the conduits which displace them repeatedly away from and towards each other. This oscillation is permitted due to flexibility of the conduits and since their ends are held at fixed locations. The sensor may either sense displacement, velocity or acceleration. A phase difference between the sensed motion and the driving motion is a measurement of mass flow rate for the fluid through the conduits. Desirably, respective sensors are provided on either side of the drive means and roughly halfway between the drive means and each respective support. These sensors produce signals which correspond to the velocity of the conduits at the locations of the sensors, and may sense either displacement, velocity or acceleration. Connectors and passages are provided to the supports for supplying a mass flow which is divided approximately evenly between the two conduits through one of the supports and then recombined and discharged from the other support. With no fluid passing through the conduits, the frequency of oscillation for the drive means will exactly match and be in phase with the frequency of oscillations sensed by the two sensors. If fluid starts to flow through the conduits, however, although the sensors will continue to sense the same frequency as the driving frequency, the leading sensor in the direction of mass flow will lag the driving frequency with regard to its phase and the downstream sensor will lead the driving frequency, again with regard to phase. This phase lead and lag is directly usable as a measurement of mass flow rate through the conduits.

According to another aspect of the invention there is provided a method of measuring the mass flow of a fluid flow, the method comprising:

transversely oscillating mid-points of a pair of straight parallel flexible conduits towards and away from each other at a selected frequency while holding opposite ends only of the conduits substantially fixed;

passing approximately one half of a fluid flow whose mass flow rate is to be measured through each of the conduits;

sensing motion of each conduit at a sensing location spaced from the mid-points of the conduits and from the opposite ends of the conduits; and

measuring a phase difference induced by the fluid flow between the selected frequency of oscillation at the mid-points and the measured motion at the sensing location, which measurement corresponds to the mass flow rate of the fluid flow.

The invention will now be further described, by way of illustrative and non-limiting example, with reference to the accompanying drawings, in which:

Figure 1 is a diagram showing a co-ordinate system in which a conduit for carrying a mass flow can be

3

rotated and illustrating the occurrence of a force caused by the rotation;

Figure 2 is a graph showing various characteristics of motion and forces at a certain point on the conduit shown in Figure 1;

Figure 3 is a side elevational view of an embodiment of the invention;

Figure 4 is a schematic representation of the movement experienced by conduits shown in Figure 3;

Figure 5 is a diagram showing the maximum amplitude of an oscillating conduit shown in Figure 3; and

Figure 6 is a graph of two sinusoidal curves of equal frequency but different phase which represent measurements made by the apparatus of Figure 3.

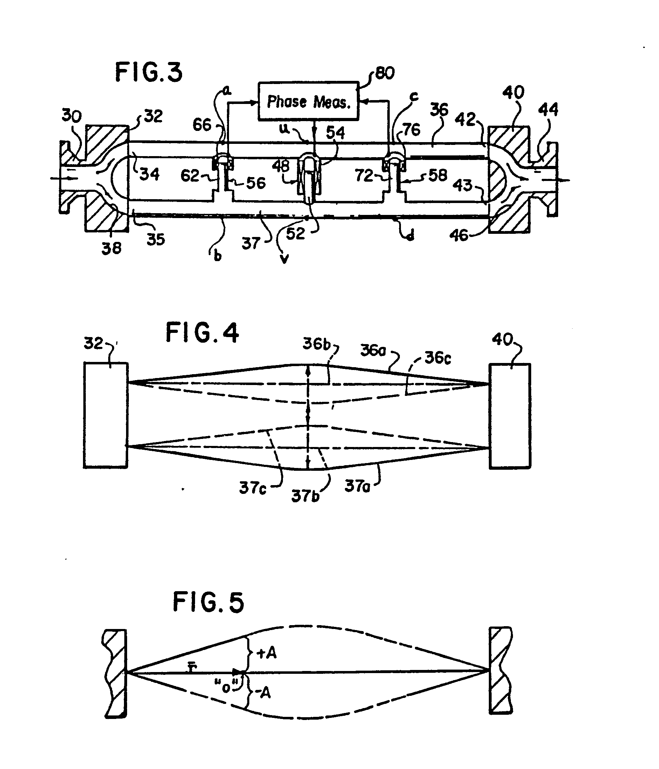

Referring to Figure 3, there is illustrated a device for measuring mass flow rate supplied to an inlet connection 30. The inlet connection 30 is connected to a first support 32 which fixes first ends 34 and 35 of a pair of parallel conduits or tubes 36 and 37. A Y-shaped passage 38 is provided in the support 32 for dividing the mass flow into the connection 30 into two approximately equal parts. Half of the mass flow is supplied to the conduit 36 and the other half to the conduit 37.

The conduits 36 and 37 have second ends 42 and 43, respectively, which are connected to a second support 40 which carries an outlet connection 44. Another Y-shaped passage 46 is provided in the support 40 for combining the flows from the conduits 36 and 37 back together and into the outlet connection 44.

A driving mechanism 48 is provided near the middle of and between the conduits 36 and 37. The driving mechanism 48 includes a solenoid coil 54 which is fixed, for example, to the conduit 36, and a permanent magnet 52 which rides in the coil 54 and is fixed to the conduit 37. By applying an electrical signal to the coil 54 at a selected frequency, the conduits 36 and 37 can be made to oscillate towards and away from each other.

Figure 4, which is a schematic representation of the device in Figure 3, shows the conduits 36 and 37 as lines. The maximum amplitudes that the conduits achieve away from each other are shown by solid lines 36a and 37a. The maximum approach is shown by the dotted lines 36c and 37c, and the rest position is shown by dot-dash lines 36b and 37b.

Turning back to Figure 3, the conduits 36 and 37 are provided with a pair of sensors 56 and 58 which are spaced apart from each other and positioned on opposite sides of the driving mechanism 48. The sensor 56 comprises a permanent magnet 62 which is magnetically coupled to a coil 66. The permanent magnet 62 and the coil 66 are connected to the conduits 37 and 36, respectively. In similar fashion, the sensor 58 includes a permanent magnet 72 which rides in a coil 76 connected to the conduits 37 and 36 respectively.

By oscillating the conduits 36 and 37 in the manner shown in Figure 4, sinusoidal currents are induced in the coil 66 and 76. These signals are proportional to the velocities of the conduits towards and away from each other at the respective sensor locations.

When no fluid is passing through the conduits 36 and 37, the oscillation applied by the driving mechanism 48 to the mid-points of the conduits 36 and 37 will generate signals in the sensors 56 and 58 which are in phase with each other and in phase with the velocity of the driving mechanism 48.

However, when fluid passes through the conduits 36 and 37, a phase difference appears between the signals from the sensors 56 and 58 relative to the velocity of the driving mechanism 48.

The sensor 56 generates a velocity signal which lags behind the velocity of the driving mechanism 48 and the sensor 58 generates a signal which leads the velocity of the driving mechanism 48.

A phase measuring device 80 (shown schematically in Figure 3) is connected to the sensors 56 and 58 as well as to the driving mechanism 48 (or at least to its power supply) for measuring the phase lead and phase lag of the respective velocity signals. The phase lead and phase lag, relative to the velocity of the driving mechanism, is related directly to the mass flow rate through the conduits 36, 37.

An example of a device suitable for use as the phase measuring device 80 is the Hewlett Packard Model 3575A. The phase difference between the driving point velocity at the centres of the conduits and the sensing point velocity spaced away from the centres can thus be utilised as a measurement of mass flow rate. Although one sensor would be sufficient for measurement, sensors on both sides of the driving mechanism increase accuracy.

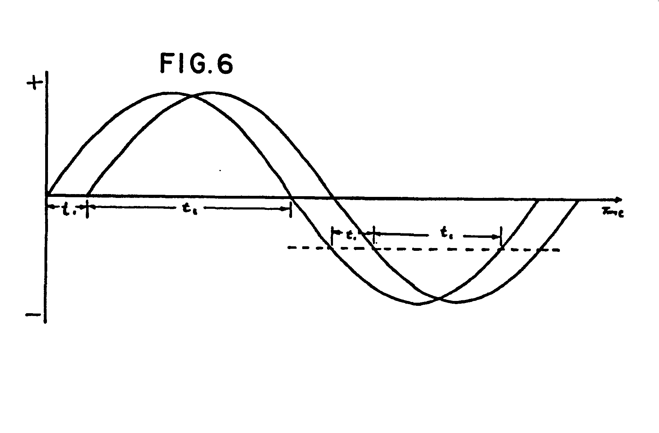

Figure 5 is a schematic illustration of one of the conduits. The position of one of the sensors is shown at "o". This is at a point a distance $\bar{r}$ from the closest support for the conduit. At this point "o", the conduit executes an upward swing having a maximum amplitude of plus A and a downward swing having a maximum amplitude of minus A.

In the following analysis, the displacement from the point "o" is designated by the letter y.

For any point on the flow conduit, the displacement y from its rest position, while being forced to oscillate at resonance with maximum amplitude A in simple harmonic motion, is given as:

$$y = A \sin wt \qquad (1)$$

where

y = displacement from the rest position
A = maximum amplitude
$w = 2\pi f$
f = resonant frequency
t = time (t = 0 when the oscillating begins).

Since the conduit is fixed at both ends and can only move transversely to its own longitudinal rest axis, the displacement y is limited to movement in upward and downward directions, with reference to the drawing. The velocity of the point "o" is then:

$$v=\frac{dy}{dt}=wA \cos wt \tag{2}$$

and its acceleration is then:

$$a=\frac{dv}{dt}=\frac{d^2y}{dt^2}=-w^2A \sin wt \tag{3}$$

The force $-\overline{F}_c$ (a vector) acting on the point "o" will act upwardly and downwardly as well as the induced oscillations and will follow the equation:

$$-\overline{F}_c=-2m_c\overline{w}_c\times\overline{V}_c \tag{4}$$

where
$-\overline{F}_c$=the apparent force resulting from the effect of the angular velocity on the moving fluid
$m_c$=mass of fluid flowing past the point "o"
$\overline{w}_c$=angular velocity of the point "o"$=\overline{V}/r$
$\overline{V}_c$=velocity of the fluid flowing past the point "o".
If k=the spring constant of the conduit at the point "o", then the induced oscillating force amplitude is:

$$\overline{F}/=-ky=-kA \sin wt \tag{5}$$

Since the two forces act in the same directions, their magnitudes can be summed directly:

$$F-F_c=\overline{F}/+/-\overline{F}_c/=(-2m_cV_cV/r)+(-kA \sin wt) \tag{6}$$

Substituting V=wA cos wt:

$$F-F_c(\frac{-2m_cV_c}{r})wA \cos wt-kA \sin w \tag{7}$$

Since $m_c$, r, $V_c$ w, $w^2$ and A are all constants for constant mass flow rate, then this reduces to:

$$F-F_c=B_1 \cos wt+B_2 \sin wt \tag{8}$$

with

$$B_1=\frac{-2 wA m_cV_c}{r}$$

and

$$B_2=-kA.$$

The sum of $B_1 \cos wt+B_2 \sin wt$ as shown in Equation (8) may be expressed as:

$$B_1 \cos wt+B_2 \sin wt=\gamma \sin (wt+\beta) \tag{9}$$

with

$$\gamma=(B_1{}^2+B_2{}^2)^{1/2}$$

and

$$\beta=\arctan(\frac{B_1}{B_2})$$

Equation (9) mathematically shows that the resultant force on the point "o" is at the same frequency as both the driving resonant oscillations, $B_1 \cos wt$ and $B_2 \sin wt$, but out of phase by β, where:

$$\beta=\arctan(\frac{B_1}{B_2})=\arctan(\frac{-2 wAm_cV_c}{-kAr}) \tag{10}$$

or

5

$$\beta = \arctan\left(\frac{2w\, m_c V_c}{kr}\right) \qquad (11)$$

Since $w = 2\pi f$, where $f =$ the frequency of oscillations which is held constant at the natural resonant frequency of the conduit, r is a fixed distance and k is a constant, then:

$$\beta = \arctan\left(\frac{m_c V_c}{a}\right) \qquad (12)$$

with

$$a = \frac{kr}{4\pi r}$$

Therefore:

with

$$m_c V_c = a \tan(\beta) \qquad (13)$$

$$m_c V_c = \text{mass flow rate.}$$

Thus, the force acting on the point "o" is sinusoidal as is the driving force, and is at the same frequency, only differing by a phase difference $\beta$. The displacement, velocity or acceleration functions (as well as any higher derivatives of these) also differ in phase relative to the corresponding drive force by the same amount:

$$\beta \pm n\pi/2 \qquad (14)$$

where n is an integer.

For very small phase differences, equation (12) becomes

$$\beta = \arctan(m_c V_c/a) \approx m_c V_c/a = m_c V_c(4\pi f/kr) \qquad (15)$$

In order to eliminate the frequency dependent term f, we must examine the two signals which differ only in phase as represented on the graph of amplitude as a function of time shown in Figure 6.

Their frequencies are equal and their periods will be:

$$T = 1/f \qquad (16)$$

with

$$T = \text{period} = 2(t_1 + t_2) \qquad (17)$$

Their relative phase angle $\beta$ is then defined as:

$$\beta = \pi t_1/(t_1 + t_2) = 2\pi t_1 f \qquad (18)$$

Substituting equation (18) into (15) yields:

$$\beta = m_c V_c(4\pi f/kr) = 2\pi t_1 f \qquad (19)$$

and therefore:

$$m_c V_c = \text{mass flowrate} = (kr/2)t_1 \qquad (20)$$

which eliminates the frequency dependency and requires only that the spring constant k, length r and time interval $t_1$ be known. The time interval $t_1$ can be measured using an oscilloscope and standard laboratory techniques.

For any set of conditions, k and r will be constants, and therefore, a measure of $t_1$ will be directly proportional to mass flow rate. It is obvious that $t_1$ can be measured along any line through the signals as shown in Figure 6 and is not restricted to the "zero crossing" base line. The time difference $t_1$ can therefore be measured between any two points with equal first and second derivatives during any one cycle of the two signals, regardless of gain or DC offset factors.

In the present design, the point "a" on the split parallel conduits of Figure 3 will follow the above progression. The mass flow rate can be directly measured by measuring the time difference $t_1$ between the driving signal at the point "u" and the mass flow rate effected signal at the point "a". With flow in the direction shown in Figure 3, the point "a" will lag the point "u". Likewise the point "b" will lag the point "v", the point "c" will lead the point "u" and the point "d" will lead the point "v". The phase angle amplitude will be equal between all of these respective points with the leading points positive and the lagging points negative. Therefore, the total phase difference $\emptyset$ between the lag at the points "a" and "b" and the lead at the points "c" and "d" will provide a signal sampling the total direct mass flow rate through both conduits twice as a weighted average. The sum of the lead and lag phase angles will, therefore, cancel

6

and provide the resonant frequency data necessary to maintain the conduits at their natural resonant frequency regardless of pressure, density or temperature variations.

The split parallel tubing arrangement of Figure 3 also allows both halves of the drive coil 48 and both of the sensors 56, 58 to be mounted to the flow conduits 36, 37 directly thereby reducing common mode vibration noise and improving performance (provided that the sprung masses are all equal at the points "a", "b", "c" and "d", and are also equal at the points "u" and "v").

Thus, the advantages of the split parallel conduits approach of Figure 3 are as follows. The mass flow rate measurement is proportional to the time measurement between points with equal first and second derivatives during any one cycle of two equal frequency signals; thus the flow rate measurement is obtained directly. The apparatus is of simple, rugged mechanical design, with ease of assembly, small overall size and ease of installation. The apparatus is process fluid density insensitive, has only slight temperature dependency and is easy to scale up and down in size. It is also process fluid viscosity insensitive, and equally applicable to liquids, gases and slurries.

## Claims

1. Apparatus for measuring the mass flow rate of a fluid flow, the apparatus comprising:
a pair of straight parallel flexible conduits (36, 37) each having opposite ends (34, 35, 42, 43), an axis and a mid-point between the opposite ends (34, 35, 42, 43);
support means (32, 40) connected to the conduits (36, 37) for holding the opposite ends (34, 35, 42, 43) only of the conduits at substantially fixed positions;
connector means (30) connected to the support means (32, 40) for supplying a fluid flow whose mass flow rate is to be measured to the pair of straight parallel conduits (36, 37) such that each conduit receives approximately one half of the fluid flow at one end of the conduits and the fluid flow is recombined at the other end of the conduits;
drive means (48) associated with the pair of conduits (36, 37) for oscillating the pair of conduits towards and away from each other at a selected frequency in a direction transverse to their respective axes and substantially at the mid-points of the conduits (36, 37);
at least one sensor (56) for sensing motion of the conduits (36, 37) at a sensing point (a, b) spaced from each mid-point and from the opposite ends (34, 35, 42, 43) to enable detection of a phase difference in the related frequency resulting from fluid flow; and
phase measuring means (80) connected to the sensor (56) and to the drive means (48) for measuring the phase difference between motion at the mid-point and motion at the sensing point (a, b), the phase difference corresponding to a measurement of the mass flow rate of the fluid flow.

2. Apparatus according to claim 1, including a second sensor (58) for sensing motion of the conduits (36, 37) at a second sensing point (c, d) spaced from each mid-point and on the side of each mid-point opposite to the first-mentioned sensing point (a, b), the first-mentioned sensing point (a, b) being upstream of each mid-point with respect to the direction of fluid flow and the second sensing point (c, d) being downstream of each mid-point with respect to the direction of fluid flow, motion at the first-mentioned sensing point (a, b) lagging motion at the mid-point with respect to phase and motion at the second sensing point (c, d) leading motion at the mid-point with respect to phase, the lead and lag of phase corresponding to the mass flow rate of the fluid flow, the phase measuring means (80) being additionally connected to the second sensor (58) for measuring the phase differences between motion at the mid-point and at each of the sensing points (a, b; c, d).

3. Apparatus according to claim 2, wherein:
the drive means (48) comprises a solenoid coil (54) connected to one of the pair of conduits (36, 37) at its mid-point, a permanent magnet (52) connected to the other of the pair of conduits (36, 37) at its mid-point, the permanent magnet (52) being movable in the coil (54), and current means connected to the solenoid coil (54) for applying current to the solenoid coil (54) at the selected frequency for oscillating said conduits (36, 37);
the first-mentioned sensor (56) comprises a first sensing coil (66) connected to one of the pair of conduits (36, 37) at the first-mentioned sensing point (a, b) and a first sensor permanent magnet (62) connected to the other of the pair of parallel conduits (36, 37);
the second sensor (58) comprises a second sensing coil (76) connected to one of the pair of conduits (36, 37) at the second sensing point (c, d) and a second sensor permanent magnet (72) connected to the other of the pair of parallel conduits (36, 37); and
the phase measuring means (80) is connected to the sensing coils (66, 76) of the first-mentioned and second sensors (56, 58).

4. Apparatus according to claim 1, claim 2 or claim 3, wherein the support means comprises a first support (32) having an input connector (30) for receiving fluid flow, a Y-shaped passage (38) in the first support (32) being connected between the input connector (30) and first ends (34, 35) of each conduit (36, 37) for dividing flow between the conduits (36, 37).

5. Apparatus according to claim 4, wherein the support means comprises a second support (40) having an output connector (44) for receiving fluid flow from the conduits (36, 37) and a Y-shaped passage (46) in the second support (40) being connected between second ends (42, 43) of the conduits (36, 37) and the output connector (44).

6. A method of measuring the mass flow rate of a fluid flow, the method comprising:

transversely oscillating mid-points of a pair of straight parallel flexible conduits (36, 37) towards and away from each other at a selected frequency while holding opposite ends (34, 35, 42, 43) only of the conduits (36, 37) substantially fixed;

passing approximately one half of a fluid flow whose mass flow rate is to be measured through each of the conduits (36, 37);

sensing motion of each conduit (36, 37) at a sensing location (a, b) spaced from the mid-points of the conduits (36, 37) and from the opposite ends (34, 35, 42, 43) of the conduits (36, 37); and

measuring a phase difference induced by the fluid flow between the selected frequency of oscillation at the mid-points and the measured motion at the sensing location (a, b), which measurement corresponds to the mass flow rate of the fluid flow.

7. A method according to claim 6, including sensing motion of the conduits (36, 37) at a second sensing location (c, d) spaced from the mid-points and on an opposite side of the mid-points from the first-mentioned sensing location (a, b), the second sensing location (c, d) also being spaced from the conduit ends (34, 35, 42, 43), and measuring a phase difference between motion at the second sensing location (c, d) and the selected frequency of oscillation at the mid-points, which phase difference also corresponds to the mass flow rate of the fluid flow.

8. A method according to claim 7, including measuring phase lead and phase lag for motions at the first-mentioned (a, b) and second (c, d) sensing locations with respect to motion at the mid-point.

**Patentansprüche**

1. Vorrichtung zum Messen der Massenflußrate eines Fluidstromes, wobei die Vorrichtung aufweist:

ein Paar von geraden, parallelen, flexiblen Leitungen (36, 37), welche jeweils gegenüberliegende Enden (34, 35, 42, 43), eine Achse und einen Mittelpunkt zwischen den gegenüberliegenden Enden (34, 35, 42, 43) haben,

eine Halteeinrichtung (32, 40), welche an die Leitungen (36, 37) angeschlossen ist, um nur die gegenüberliegenden Enden (34, 35, 42, 43) der Leitungen in im wesentlichen festen Positionen zu halten,

eine Verbindungseinrichtung (30), welche mit der Halteeinrichtung (32, 40) verbunden ist, um einen Fluidstrom zuzuführen, dessen Massenflußrate zu dem Paar von geraden parallelen Leitungen (36, 37) derart gemessen werden soll, daß jede Leitung näherungsweise die Hälfte des Fluidstromes an einem Ende der Leitungen aufnimmt und daß der Fluidstrom an dem anderen Ende der Leitungen wieder verbunden wird,

eine Antriebseinrichtung (48), welche mit dem Paar von Leitungen (36, 37) verbunden ist, um das Paar von Leitungen oszillierend aufeinander zu und voneinander weg bei einer ausgewählten Frequenz zu bewegen und zwar in Richtung quer zu ihren jeweiligen Achsen und im wesentlichen an den Mittelpunkten der Leitungen (36, 37),

zumindest einen Sensor (56) zum Abfühlen der Bewegung der Leitungen (36, 37) an einem Abfühlpunkt (a, b), welcher sowohl vom Mittelpunkt als auch von den gegenüberleigenden Enden (34, 35, 42, 43) entfernt ist, um das Erfassen einer Phasendifferenz in der zugehörigen Frequenz zu ermöglichen, welche sich aus dem Fluidstrom ergibt; und

eine Phasenmeßeinrichtung (80), welche mit dem Sensor (56) und mit der Antriebseinrichtung (48) verbunden ist, um die Phasendifferenz zwischen der Bewegung am Mittelpunkt und der Bewegung an dem Abfühlpunkt (a, b) zu messen, wobei die Phasendifferenz einer Messung der Massendurchflußrate des Fluidstromes entspricht.

2. Vorrichtung nach Anspruch 1, einschließlich eines zweiten Sensors (58) zum Erfassen der Bewegung der Leitungen (36, 37) an einem zweiten Abfühlpunkt (c, d), welcher von jedem der Mittelpunkte beabstandet ist und auf der Seite jedes Mittelpunktes liegt, welcher dem ersterwähnten Abfühlpunkt (a, b) abgewandt ist, wobei der ersterwähnte Abfühlpunkt (a, b) bezüglich des Fluidstromes stromaufwärts von jedem Mittelpunkt und der zweite Abfühlpunkt (c, d) stromabwärts jedes Mittelpunktes liegt, wobei die Bewegung an dem ersterwähnten Abfühlpunkt (a, b) hinsichtlich der Phase der Bewegung am Mittelpunkt nacheilt und wobei die Bewegung am zweiten Abfühlpunkt (c, d) der Bewegung am Mittelpunkt bezüglich der Phase voreilt, wobei Voreilung und Nacheilung der Phase der Massendurchflußrate des Fluidstromes entsprechen und die Phasenmeßeinrichtung (80) zusätzlich mit dem zweiten Sensor (58) verbunden ist, um die Phasendifferenzen zwischen der Bewegung am Mittelpunkt und an jedem der Abfühlpunkte (a, b; c, d) zu messen.

3. Vorrichtung nach Anspruch 2, wobei:

die Antriebseinrichtung (48) eine Spule (54) (Solenoid) aufweist, welche an einer von dem Paar von Leitungen (36, 37) an deren Mittelpunkt angeschlossen ist, wobei ein Dauermagnet (52) mit der anderen des Paares von Leitungen (36, 37) an deren Mittelpunkt verbunden ist, der Dauermagnet (52) in der Spule (54) bewegbar ist und eine Stromeinrichtung mit der Spule (54) verbunden ist, um ihr Strom bei einer ausgewählten Frequenz zuzuführen, um die Leitungen (36, 37) oszillierend zu bewegen,

der ersterwähnte Sensor (56) eine erste Abfühlspule (66) aufweist, welche mit einer von dem Paar von Leitungen (36, 37) an dem ersterwähnten Abfühlpunkt (a, b) verbunden ist, und ein Dauermagnet (62) für den ersten Sensor mit der anderen aus dem Paar von parallelen Leitungen (36, 37) verbunden ist,

der zweite Sensor (58) eine zweite Abfühlspule (76) aufweist, welche mit einer aus dem Paar von Leitungen (36, 37) an dem zweiten Abfühlpunkt (c, d) verbunden ist und einen zweiten Dauermagneten (72) für den zweiten Sensor aufweist, welcher mit der anderen aus dem Paar von parallelen Leitungen (36, 37) verbunden ist, und

wobei die Phasenmeßeinrichtung (80) mit den Abfühlspulen (66, 76) des ersterwähnten und zweiterwähnten Sensors (56, 58) verbunden ist.

4. Vorrichtung nach Anspruch 1, 2 oder 3, wobei die Halteeinrichtung einen ersten Halter (32) aufweist, der einen Eingangsanschluß (30) für die Aufnahme des Fluidstromes hat, wobei ein Y-förmiger Durchgang (38) in dem ersten Halter (32) zwischen dem Eingangsanschluß (30) und den ersten Enden (34, 35) jeder der Leitungen (36, 37) angeschlossen ist, um den Strom zwischen den Leitungen (36, 37) aufzuteilen.

5. Vorrichtung nach Anspruch 4, wobei die Halteeinrichtung einen zweiten Halter (40) aufweist, der einen Auslaßanschluß (44) für die Aufnahme des Fluidstromes aus den Leitungen (36, 37) hat, und wobei ein Y-förmiger Durchgang (46) in dem zweiten Halter (40) zwischen den beiden Enden (42, 43) der Leitungen (36, 37) und dem Auslaßanschluß angeschlossen ist.

6. Verfahren zum Messen der Massendurchflußrate eines Fluidstromes, wobei das Verfahren aufweist:

in Querrichtung Hin- und Herbewegen der Mittelpunkte eines Paares gerader, paralleler, flexibler Leitungen (36, 37) in Richtung aufeinander zu und voneinander weg mit einer ausgewählten Frequenz, während nur die gegenüberliegenden Enden (34, 35, 42, 43) der Leitungen (36, 37) im wesentlichen festgehalten werden,

Hindurchführen näherungsweise einer Hälfte des Fluidstromes, dessen Massendurchflußrate gemessen werden soll, durch jede der Leitungen (36, 37),

Erfassen der Bewegung jeder Leitung (36, 37) an einer Abfühlstelle (a, b), welche von den Mittelpunkten der Leitungen (36, 37) und von den gegenüberliegenden Enden (34, 35, 42, 43) der Leitungen (36, 37) beabstandet ist, und

Messen der Phasendifferenz, welche durch den Fluidstrom zwischen der ausgewählten Oszillationsfrequenz am Mittelpunkt und der gemessenen Bewegung an dem Abfühlpunkt (a, b) induziert wird, wobei diese Messung der Massendurchflußrate des Fluidstromes entspricht.

7. Verfahren nach Anspruch 6, einschließlich des Abfühlens der Bewegung der Leitungen (36, 37) an einer zweiten Abfühlstelle (c, d), welche von den Mittelpunkten beabstandet ist und bezüglich der Mittelpunkte gegenüber von der ersterwähnten Abfühlstelle (a, b) liegt, wobei die zweite Abfühlstelle (c, d) ebenfalls von den Leitungsenden (34, 35, 42, 43) beabstandet ist, und einschließlich des Messens einer Phasendifferenz zwischen der Bewegung an der zweiten Abfühlstelle (c, d) und der ausgewählten Oszillationsfrequenz an dem Mittelpunkt, wobei diese Phasendifferenz ebenfalls der Massendurchflußrate des Fluidstromes entspricht.

8. Verfahren nach Anspruch 7, einschließlich des Messens der Phasenvoreilung und Phasennacheilung für Bewegungen an der ersterwähnten (a, b) und der zweiten (c, d) Abfühlstelle bezüglich der Bewegung am Mittelpunkt.

**Revendications**

1. Appareil pour mesurer le débit massique d'un écoulement de fluide, l'appareil comprenant:

une paire de conduits flexibles parallèles et droits (36, 37) ayant chacun des extrémités opposées (34, 35, 42, 43), un axe et un point médian entre les extrémités opposées (34, 35, 42, 43);

des moyens de support (32, 40) reliés aux conduits (36, 37) pour maintenir les extrémités opposées (34, 35, 42, 43) seulement des conduits dans des positions sensiblement fixes;

des moyens de raccordement (30) reliés aux moyens de support (32, 40) pour fournir un écoulement de fluide dont le débit massique doit être mesuré à la paire de conduits parallèles droits (36, 37) de manière à ce que chaque conduit reçoive environ une moitié de l'écoulement de fluide à une extrémité des conduits et que l'écoulement de fluide soit recombiné à l'autre extrémité des conduits;

des moyens d'entraînement (48) associés à la paire de conduits (36, 37) pour faire osciller la paire de conduits en les rapprochant et en les écartement l'un de l'autre à une fréquence choisie dans une direction transversale par rapport à leurs axes respectifs et sensiblement aux points médians des conduits (36, 37);

au moins un détecteur (56) pour détecter le mouvement des conduits (36, 37) en un point de détection (a, b) éloigné de chacun des points médians et des extrémités opposées (34, 35, 42, 43) pour permettre la détection d'une différence de phase dans la fréquence associée résultant de l'écoulement de fluide; et

des moyens de mesure de phase (80) reliés au détecteur (56) et aux moyens d'entraînement (48) pour mesurer la différence de phase entre le mouvement au point médian et le mouvement au point de détection (a, b), la différence de phase correspondant à une mesure du débit massique de l'écoulement de fluide.

2. Appareil selon la revendication 1, comprenant un second détecteur (58) pour détecter le mouvement des conduits (36, 37) à un second point de détection (c, d) éloigné de chaque point médian et du côté de chaque point médian opposé au point de détection mentionné en premier (a, b), le point de détection mentionné en premier (a, b) étant en amont de chaque point médian par rapport à la direction de l'écoulement de fluide et le second point de détection (c, d) étant en aval de chaque point médian par rapport à la direction de l'écoulement de fluide, le mouvement au point de détection mentionné en premier (a, b) étant en retard sur le mouvement au point médian relativement à la phase et le mouvement au second point de détection (c, d) étant en avance sur le mouvement au point médian relativement à la phase, l'avance et le retard de phase correspondant au débit massique de l'écoulement de fluide, les moyens de phase (80) étant en outre reliés au second détecteur (58) pour mesurer les différences de phase entre le mouvement au point médian et à chacun des points de détection (a, b; c, d).

3. Appareil selon la revendication 2, dans lequel:

les moyens d'entraînement (48) comprennent une bobine à solénoïde (54) reliée à l'un des conduits de la paire de conduits (36, 37) au niveau de son point médian, un aimant permanent (52) relié à l'autre conduit de la paire de conduits (36, 37) au niveau de son point médian, l'aimant permanent (52) étant apte à se déplacer dans la bobine (54), et des moyens de courant reliés à la bobine à solénoïde (54) pour appliquer un courant à la bobine à solénoïde (54) à la fréquence choisie pour faire osciller lesdits conduits (36, 37);

le détecteur mentionné en premier (56) comprend une première bobine de détection (66) reliée à l'un des conduits de la paire de conduits (36, 37) au point de détection mentionné en premier (a, b) et un premier aimant permanent de détecteur (62) relié à l'autre conduit de la paire de conduits parallèles (36, 37);

le second détecteur (58) comprend une second bobine de détection (76) reliée à l'un des conduits de la paire de conduits (36, 37) au second point de détection (c, d) et un second aimant permanent de détecteur (72) relié à l'autre conduit de la paire de conduits parallèles (36, 37); et

les moyens de mesure de phase (80) sont reliés aux bobines de détection (66, 76) du détecteur mentionné en premier et du second détecteur (56, 58).

4. Appareil selon la revendication 1, la revendication 2 ou la revendication 3, dans lequel les moyens de support comprennent un premier support (32) comportant un raccord d'entrée (30) pour recevoir l'écoulement de fluide, un passage en forme de Y (38) dans le premier support (32) étant relié entre le raccord d'entrée (30) et des premières extrémités (34, 35) de chaque conduit (36, 37) pour répartir l'écoulement entre les conduits (36, 37).

5. Appareil selon la revendication 4, dans lequel les moyens de support comprennent un second support (40) ayant un raccord de sortie (44) pour recevoir l'écoulement de fluide en provenance des conduits (36, 37), un passage en forme de Y (46) dans le second support (40) étant relié entre des secondes extrémités (42, 43) des conduits (36, 37) et le raccord de sortie (44).

6. Procédé de mesure du débit massique d'un écoulement de fluide, le procédé consistant à:

faire osciller transversalement les points médians d'une paire de conduits (36, 37) flexibles parallèles et droits de manière à ce qu'ils se rapprochent et s'éloignent l'un de l'autre à une fréquence choisie tout en maintenant sensiblement immobiles uniquement les extrémités opposées (34, 35, 42, 43) des conduits (36, 37);

faire passer environ une moitié d'un écoulement de fluide dont le débit massique est à mesurer à travers chacun des conduits (36, 37);

détecter le mouvement de chaque conduit (36, 37) en un emplacement de détection (a, b) éloigné des points médians des conduits (36, 37) et des extrémités opposées (34, 35, 42, 43) des conduits (36, 37); et

mesurer une différence de phase induite par l'écoulement de fluide entre la fréquence d'oscillation choisie aux points médians et le mouvement mesuré à l'emplacement de détection (a, b), cette mesure correspondant au débit massique de l'écoulement de fluide.

7. Procédé selon la revendication 6, comprenant la détection du mouvement des conduits (36, 37) à un second emplacement de détection (c, d) distant des points médians et situé sur un côté opposé des points médians à partir de l'emplacement de détection mentionné en premier (a, b), le second emplacement de détection (c, d) étant également éloigné des extrémités (34, 35, 42, 43) des conduits, et la mesure d'une différence de phase entre le mouvement au second emplacement de détection (c, d) et la fréquence choisie d'oscillation aux points médians, cette différence de phase correspondant également au débit massique de l'écoulement de fluide.

8. Procédé selon la revendication 7, comprenant la mesure de l'avance de phase et du retard de phase pour des mouvements à l'emplacement de détection mentionné en premier (a, b) et au second emplacement de détection (c, d) par rapport au mouvement au point médian.

FIG.1

FIG.2

1

FIG.3

FIG.4

FIG.5

# FIG.6